# EUROPEAN PATENT SPECIFICATION

(11) **EP 3 971 067 B1**
(45) Date of publication and mention of the grant of the patent: **19.04.2023**
(21) Application number: 21192368.5
(22) Date of filing: 20.08.2021
(51) Int. Cl.: B62H 5/00, B62J 1/12, B62K 11/04

(54) **STRADDLED VEHICLE SEAT LOCK**
SITZSPERRE EINES GRÄTSCHSITZFAHRZEUGS
SERRURE DE SIÈGE D'UN VÉHICULE À ENFOURCHER

(30) Priority: 18.09.2020 JP 2020156924
(43) Date of publication of application: 23.03.2022
(73) Proprietor: Yamaha Hatsudoki Kabushiki Kaisha, Iwata-shi, Shizuoka 438-8501 (JP)
(72) Inventor: Oba, Mineo, Iwata-shi, Shizuoka, 438-8501 (JP)
(74) Representative: Grünecker Patent- und Rechtsanwälte PartG mbB

(56) References cited:
- DE-A1- 4 330 120
- JP-A- H06 206 584
- JP-A- H10 203 443
- JP-A- 2017 061 301

## Description

The present invention relates to a straddled vehicle according to the preamble of independent claim 1. Such a straddled vehicle can be taken from the prior art document JP 2017 061301 A.

Among motorcycles equipped with a tandem seat in addition to a main seat, some are arranged so that the main seat and the tandem seat are removable therefrom and that onboard accessories, e.g., a battery, and/or small storage spaces are provided below these seats. In that case, seat lock mechanisms may be provided in order to secure the seats to the vehicle body and thus prevent the on-board accessories and any items kept in the storage space provided below the seats from being stolen.

Japanese Patent No. 3152528 discloses a motorcycle that includes a seat lock mechanism for the main seat, and a seat lock mechanism for the tandem seat. The seat lock mechanism for the tandem seat is unlocked with a key operation. On the other hand, the seat lock mechanism for the main seat is unlocked by manipulating a lock pin with a finger.

In the configuration disclosed in Japanese Patent No. 3152528, the lock pin of the seat lock mechanism for the main seat is locked by a locking plate that is monolithically formed with the tandem seat. Therefore, once the tandem seat is mounted, the seat lock mechanism for the main seat cannot be unlocked and thus the main seat cannot be removed. This is highly effective for preventing theft.

However, in the motorcycle of Japanese Patent No. 3152528, since the locking plate needs to extend from the tandem seat to near the seat lock mechanism for the main seat, the locking plate inevitably becomes long. Therefore, it is necessary to place any component parts in the vicinity of the tandem seat so as to avoid the locking plate, which reduces the degree of freedom concerning the layout of those component parts. Further, when mounting the tandem seat onto the vehicle body, the locking plate also needs to be aligned as a lock bracket of the tandem seat is locked to a locking pin that is on the vehicle body side, whereby the easiness of mounting the tandem seat is reduced.

The present invention has been made in view of the above problem, and an objective thereof is to provide a straddled vehicle in which manipulation of the main seat lock mechanism can be restricted, without reducing the degree of freedom concerning the layout of component parts or the easiness of mounting of the tandem seat. According to the present invention said object is solved by a straddled vehicle having the features of independent claim 1. Preferred embodiments are laid down in the dependent claims.

The present specification discloses straddled vehicles as recited in the following Items.

### [Item 1]

A straddled vehicle comprising:
a main seat on which a rider sits;
a tandem seat disposed rearward of the main seat;
a seat frame being located below the main seat and the tandem seat to support the main seat and the tandem seat;
a seat lock bracket attached to the seat frame and disposed near a rear end portion of the main seat;
a main seat lock mechanism to secure the main seat to the seat frame in a detachable manner; and
a tandem seat lock mechanism to secure the tandem seat to the seat frame in a detachable manner, the tandem seat lock mechanism being manipulable with a key, wherein,
the main seat lock mechanism is attached to the seat lock bracket;
the main seat includes a first engaging portion disposed on a back face of the main seat;
the main seat lock mechanism includes a manipulable portion to be manipulated with a finger, and a second engaging portion to engage with the first engaging portion;
the straddled vehicle further includes a manipulation restricting member to restrict manipulation of the manipulable portion of the main seat lock mechanism, the manipulation restricting member being provided as a separate piece from the tandem seat and mounted to the seat lock bracket in a detachable manner;
a portion of the manipulation restricting member is covered by the tandem seat in an upper plan view of the vehicle; and
the manipulation restricting member includes a recess formed in the portion that is covered by the tandem seat in an upper plan view of the vehicle, the recess having a depth extending along an up-down direction, the tandem seat includes a downward-protruding protrusion, and/or the seat lock bracket includes an upward-protruding protrusion; and the protrusion of the tandem seat and/or the protrusion of the seat lock bracket are inserted in the recess of the manipulation restricting member to constitute the straddled vehicle according to the independent claim 1.

A straddled vehicle according to an embodiment of the present teaching includes the manipulation restricting member, which restricts manipulation of the manipulable portion of the main seat lock mechanism, whereby unwanted manipulation of the manipulable portion can be prevented. Moreover, since the manipulation restricting member is provided as a separate piece from the tandem seat, the degree of freedom concerning the layout of component parts to be provided near the tandem seat or the easiness of mounting the tandem seat are less likely to be reduced. Furthermore, since the manipulation restricting member includes the recess having a depth extending along the up-down direction, movements of the manipulation restricting member along the front-rear/right-left directions can be restricted. As the tandem seat includes a downward-protruding protrusion and/or the seat lock bracket includes an upward-protruding protrusion, by allowing the protrusion of the tandem seat and/or the protrusion of the seat lock bracket to be inserted in the recess of the manipulation restricting member, movements of the manipulation restricting member along the front-rear/right-left directions are restricted.

### [Item 2]

The straddled vehicle of Item 1, wherein the manipulation restricting member comprises a portion that covers at least a part of the manipulable portion in a side view of the vehicle.

Because the manipulation restricting member includes a portion that covers at least a part of the manipulable portion in a side view of the vehicle, manipulation from a lateral direction can be restricted based on a relatively simple structure.

### [Item 3]

The straddled vehicle of Item 2, wherein,
the main seat lock mechanism is configured so that engagement between the first engaging portion and the second engaging portion is released when the manipulable portion is slid by a predetermined distance or more; and
a distance between the portion of the manipulation restricting member that covers at least a part of the manipulable portion and the manipulable portion is smaller than the predetermined distance.

The main seat lock mechanism may be configured so that, for example, the engagement between the first engaging portion and the second engaging portion can be released by sliding the manipulable portion by a predetermined distance or more. In that case, from the standpoint of better preventing a release of engagement from occurring due to an unwanted manipulation of the manipulable portion, the distance between the portion of the manipulation restricting member that covers at least a part of the manipulable portion and the manipulable portion may preferably be smaller than the aforementioned predetermined distance (i.e., the distance of movement needed to effect a release of engagement).

### [Item 4]

The straddled vehicle of Item 1, wherein,
the tandem seat includes the protrusion; and
the protrusion of the tandem seat is inserted in the recess of the manipulation restricting member.

In the case where the tandem seat includes the downward-protruding protrusion, by allowing the protrusion of the tandem seat to be inserted in the recess of the manipulation restricting member, movements of the manipulation restricting member along the front-rear/right-left directions can be restricted. Moreover, the manipulation restricting member can be prevented from being removed once the tandem seat is secured by the tandem seat lock mechanism.

### [Item 5]

The straddled vehicle of Item 4, wherein the protrusion of the tandem seat is a load-receiving member.

The protrusion of the tandem seat may be a load-receiving member to receive the load of the tandem seat, for example.

### [Item 6]

The straddled vehicle of any of Items 1 to 5, wherein the recess of the manipulation restricting member is a throughhole.

The recess of the manipulation restricting member may be a throughhole.

### [Item 7]

The straddled vehicle of any of Items 1 to 6, wherein the manipulation restricting member is made of rubber.

In the case where the manipulation restricting member is made of rubber, the manipulation restricting member may undergo elastic deformation, thus facilitating attachment/detachment of the manipulation restricting member to/from the seat lock bracket.

### [Item 8]

The straddled vehicle of any of Items 1 to 7, wherein the manipulation restricting member includes a tab that locks to a rear end portion of the seat lock bracket.

In the case where the manipulation restricting member includes a tab that locks to the rear end portion of the seat lock bracket, the position at which the manipulation restricting member is attached to the seat lock bracket can be kept stable.

According to the embodiments of the present teaching, straddled vehicles are provided in which manipulation of the main seat lock mechanism can be restricted, without reducing the degree of freedom concerning the layout of component parts or the easiness of mounting of the tandem seat.

### BRIEF DESCRIPTION OF THE DRAWINGS

FIG. 1 is a left side view schematically showing a motorcycle 1 according to an embodiment of the present teaching.
FIG. 2 is a top view showing the vicinity of a main seat 20 and a tandem seat 22 of the motorcycle 1.
FIG. 3 is a top view showing the motorcycle 1 with the tandem seat 22 removed.
FIG. 4 is a top view showing the motorcycle 1 with the main seat 20 and the tandem seat 22 removed.
FIG. 5 is a plan view showing the main seat 20, the tandem seat 22, and a seat lock bracket 30 from below.
FIG. 6 is a perspective view showing the vicinity of the seat lock bracket 30 of the motorcycle 1.
FIG. 7A is a perspective view schematically showing a manipulation restricting member 60.
FIG. 7B is a top view schematically showing the manipulation restricting member 60.
FIG. 7C is a left side view schematically showing the manipulation restricting member 60.
FIG. 8A is a cross-sectional view showing a configuration where a protrusion 24 of the tandem seat 22 is inserted in a recess 61 of the manipulation restricting member 60.
FIG. 8B is a cross-sectional view showing a configuration where a protrusion 38 of the seat lock bracket 30 is inserted in the recess 61 of the manipulation restricting member 60.
FIG. 8C is a cross-sectional view showing a configuration where a protrusion 24 of the tandem seat 22 is inserted in the recess 61 of the manipulation restricting member 60.
FIG. 8D is a cross-sectional view showing a configuration where a protrusion 38 of the seat lock bracket 30 is inserted in the recess 61 of the manipulation restricting member 60.

### DETAILED DESCRIPTION

Hereinafter, embodiments of the present teaching will be described with reference to the drawings.

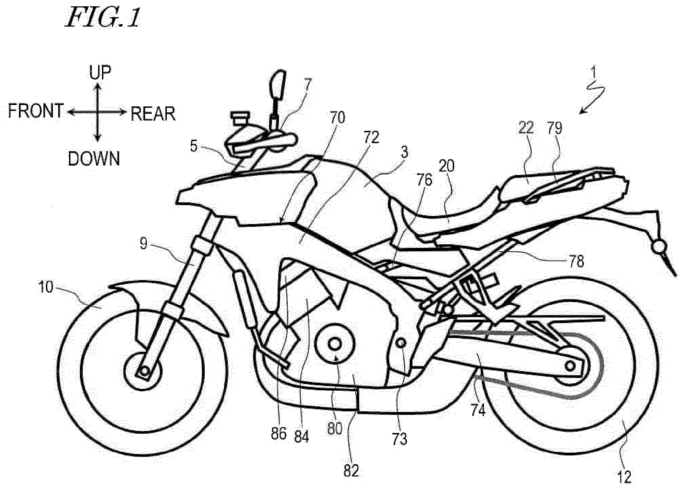

With reference to FIG. 1, a motorcycle 1 according to an embodiment of the present teaching will be described. FIG. 1 is a left side view schematically showing the motorcycle 1. The motorcycle 1 shown in FIG. 1 is an on-road type motorcycle. Note that motorcycles according to embodiments of the present teaching are not limited to on-road type motorcycles. Motorcycles according to embodiments of the present teaching may be motorcycles of any other type, such as a moped type, an off-road type, or a scooter type.

In the following description, "front", "rear", "right", and "left" respectively mean the front, rear, right, and left as viewed from a rider on the motorcycle 1. Herein, "up/above" and "down/below" respectively refer to the up/above direction and the down/below direction when the motorcycle 1 is stopped on the horizontal plane.

As shown in FIG. 1, the motorcycle 1 includes a fuel tank 3, a main seat 20 on which a rider sits, a tandem seat 22 disposed rearward of the main seat 20, an engine 80 (which is an internal combustion engine), and a body frame 70 supporting these elements.

A head pipe 5 is provided at the front of the body frame 70. A steering shaft (not shown) is supported by the head pipe 5, with a handle bar 7 being provided at an upper portion of the steering shaft. Front forks 9 are provided at a lower portion of the steering shaft. A front wheel 10 is supported at lower end portions of the front forks 9 so as to be capable of rotating.

The body frame 70 includes a main frame 72 and a pair of rear arms 74. The main frame 72 extends in an obliquely lower rear direction from the head pipe 5. The main frame 72 is linked to both of the pair of rear arms 74 via a pivot axis 73. A rear wheel 12 is supported at rear end portions of the pair of rear arms 74 so as to be capable of rotating.

The body frame 70 further includes: a seat frame 76 extending in an obliquely upper rear direction from an intermediate portion of the main frame 72; and a pair of backstays 78 extending in an obliquely upper rear direction from the main frame 72, rearward of the seat frame 76.

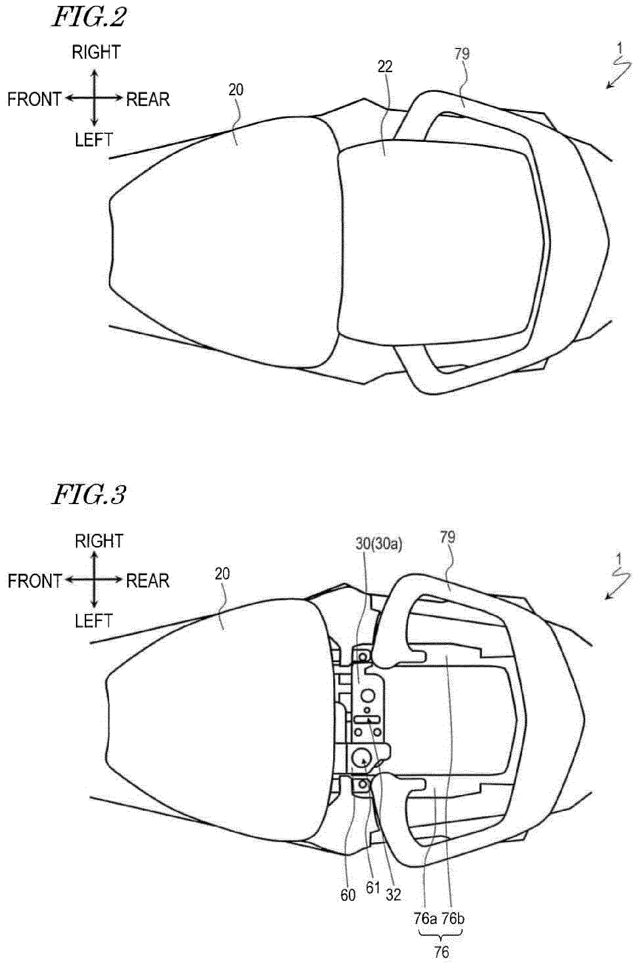

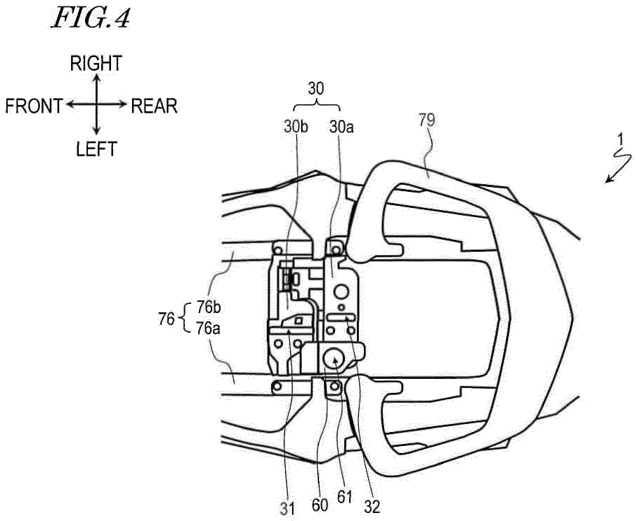

The seat frame 76 is located below the main seat 20 and the tandem seat 22, so as to support the main seat 20 and the tandem seat 22. The seat frame 76 and the pair of backstays 78 are connected to each other, rearward of the main frame 72. The seat frame 76 includes a left seat frame member 76a located on the left side of the vehicle and a right seat frame member 76b located on the right side of the vehicle (see FIG. 3 and FIG. 4).

The engine 80 is located below the main frame 72. The engine 80 is supported by the main frame 72 in a manner not capable of swinging. The engine 80 includes a crankcase 82, a cylinder block 84 extending in an obliquely upper front direction from the crankcase 82, a cylinder head 86 connected to an upper portion of the cylinder block 84, and a cylinder head cover (not shown) connected to an upper portion of the cylinder head 86.

Next, with reference also to FIG. 2, FIG. 3 and FIG. 4, the configuration of the motorcycle 1 will be described in more detail. FIG. 2 is a top view showing the vicinity of the main seat 20 and the tandem seat 22. FIG. 3 is a top view where the tandem seat 22 is removed. FIG. 4 is a top view where both the main seat 20 and the tandem seat 22 are removed.

The main seat 20 and the tandem seat 22 are located above the seat frame 76. A storage space is provided below the main seat 20 and the tandem seat 22. In the present embodiment, as shown in FIG. 1 and FIG. 2, a rear end portion of the main seat 20 is locked by a front end portion of the tandem seat 22. Therefore, while the tandem seat 22 is mounted, the main seat 20 cannot be removed.

As shown in FIG. 3 and FIG. 4, the motorcycle 1 includes a seat lock bracket 30 that is attached to the seat frame 76. The seat lock bracket 30 is disposed near the rear end portion of the main seat 20 (i.e., at least partially overlapped with the rear end portion of the main seat 20 when seen from a top view). The seat lock bracket 30 bridges across the left seat frame member 76a and the right seat frame member 76b. A manipulation restricting member 60 (described later) is mounted to the seat lock bracket 30. In the example shown, a grab bar 79 is attached to the seat frame 76.

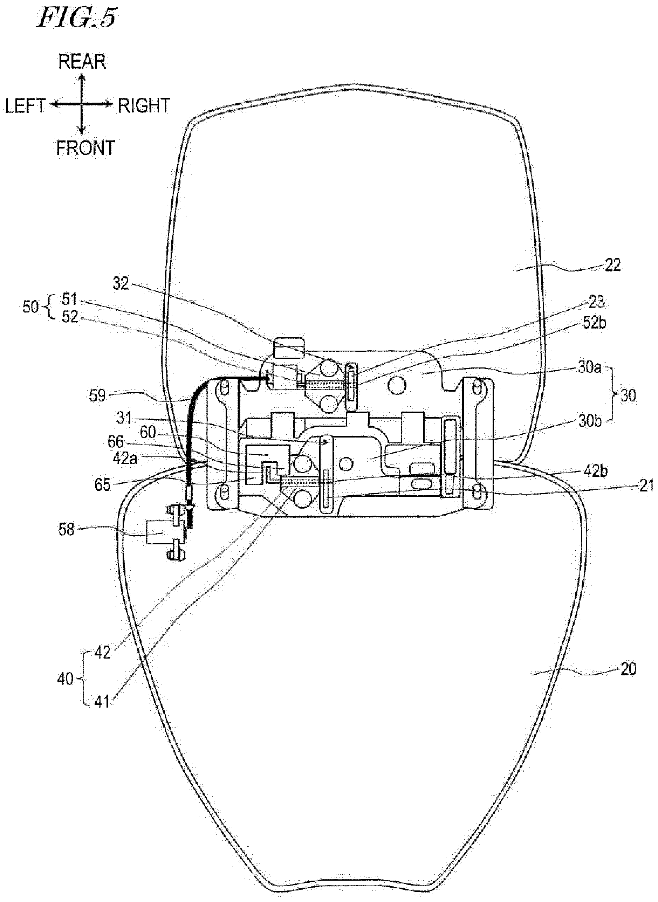

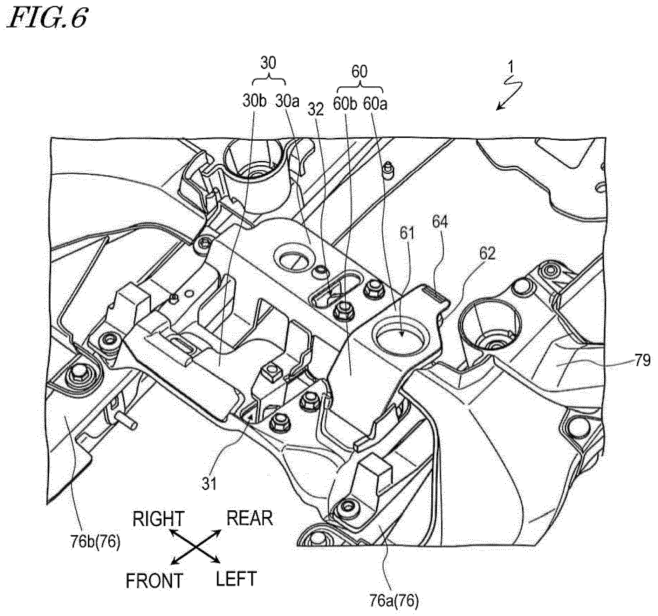

FIG. 5 is a plan view showing the main seat 20, the tandem seat 22, and the seat lock bracket 30 from below. FIG. 6 is a perspective view showing the vicinity of the seat lock bracket 30. As shown in FIG. 5, a main seat lock mechanism 40 and a tandem seat lock mechanism 50 are attached to the seat lock bracket 30. As shown in FIG. 6, the seat lock bracket 30 includes an upper section 30a and a lower section 30b that is located frontward and downward of the upper section 30a. The main seat lock mechanism 40 is attached to a lower face of the lower section 30b, whereas the tandem seat lock mechanism 50 is attached to a lower face of the upper section 30a.

The main seat lock mechanism 40 secures the main seat 20 to the seat frame 76 in a detachable manner. The tandem seat lock mechanism 50 secures the tandem seat 22 to the seat frame 76 in a detachable manner. The tandem seat lock mechanism 50 is manipulated with a key to be inserted into a key cylinder 58 that is disposed below and on the left side of the main seat 20. The key cylinder 58 and the tandem seat lock mechanism 50 are connected with a wire cable 59. On the other hand, the main seat lock mechanism 40 is manipulated with a finger.

The main seat 20 includes a locked portion (first engaging portion) 21 disposed on a back face (surface of the main seat that faces downward with regard to an up-down direction of the vehicle) of the main seat 20. The locked portion 21 is formed in a rear portion of the main seat 20, and protrudes downward from the back face of the main seat 20. The locked portion 21 has a throughhole penetrating across the vehicle width.

The main seat lock mechanism 40 includes: a body section 41 attached to the seat lock bracket 30; and a movable section 42 that is capable of sliding relative to the body section 41. The movable section 42 is urged toward right with a spring (not shown). The movable section 42 includes: a manipulable portion 42a to be manipulated with a finger; and a seat-locking portion (second engaging portion) 42b to engage with the locked portion 21 of the main seat 20. An aperture 31 having a substantially rectangular shape is made in the lower section 30b of the seat lock bracket 30, into which the locked portion 21 of the main seat 20 can be inserted. Once fitted in the aperture 31, the locked portion 21 engages with the seat-locking portion 42b of the main seat lock mechanism 40. More specifically, the seat-locking portion 42b fits into the throughhole of the locked portion 21. This causes the main seat 20 to be secured to the seat frame 76. When the manipulable portion 42a is manipulated with a finger so as to slide the movable section 42 toward left, the engagement between the locked portion 21 of the main seat 20 and the seat-locking portion 42b is released, whereby the main seat 20 becomes removable.

The tandem seat 22 includes a locked portion (third engaging portion) 23 disposed on a back face of the tandem seat 22. The locked portion 23 is formed in a front portion of the tandem seat 22, and protrudes downward from the back face of the tandem seat 22. The locked portion 23 has a throughhole penetrating across the vehicle width.

The tandem seat lock mechanism 50 includes a body section 51 that is attached to the seat lock bracket 30 and a movable section 52 that is capable of sliding relative to the body section 51. The movable section 52 is urged toward right by a spring (not shown). At one end of the movable section 52, the wire cable 59 is connected. At the other end of the movable section 52, a seat-locking portion (fourth engaging portion) 52b that engages with the locked portion 23 of the tandem seat 22 is provided. An aperture 32 having a substantially rectangular shape is made in the upper section 30a of the seat lock bracket 30, into which the locked portion 23 of the tandem seat 22 can be inserted. Once fitted in the aperture 32, the locked portion 23 engages with the seat-locking portion 52b of the tandem seat lock mechanism 50. More specifically, the seat-locking portion 52b fits into the throughhole of the locked portion 23. This causes the tandem seat 22 to be secured to the seat frame 76. When the movable section 52 is slid toward left with a key manipulation, the engagement between the locked portion 23 of the tandem seat 22 and the seat-locking portion 52b is released, whereby the tandem seat 22 becomes removable. Note that the tandem seat lock mechanism 50 does not need to be of a mechanical type as illustrated, but may instead be of an electrical type, e.g., by using an actuator.

The motorcycle 1 according to the present embodiment further includes the manipulation restricting member 60, which restricts (or prevents) manipulation of the manipulable portion 42a of the main seat lock mechanism 40. The manipulation restricting member 60 is provided as a separate piece from the tandem seat 22. The manipulation restricting member 60 is mounted to the seat lock bracket 30 in a detachable manner. In the present embodiment, the manipulation restricting member 60 is made of rubber. In the example shown, the manipulation restricting member 60 is mounted onto the left side of the seat lock bracket 30. As will be understood from FIG. 2, FIG. 3, and FIG. 4, in an upper plan view of the vehicle, a portion of the manipulation restricting member 60 is covered by the tandem seat 22, while another portion of the manipulation restricting member 60 is covered by the main seat 20.

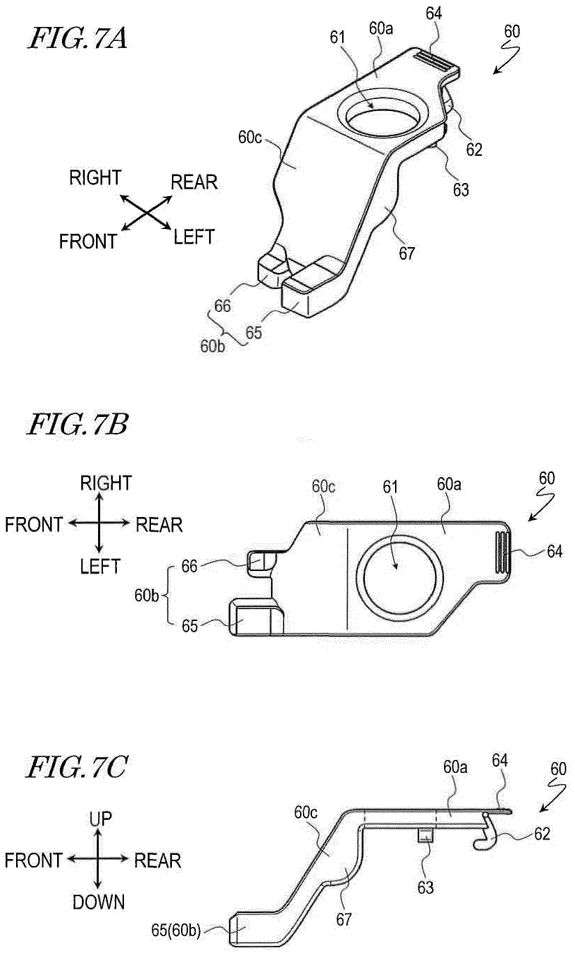

FIG. 7A, FIG. 7B, and FIG. 7C are a perspective view, a top view, and a left side view schematically showing the manipulation restricting member 60. The manipulation restricting member 60 includes: an upper section 60a; a lower section 60b that is located frontward and downward of the upper section 60a; and a connecting section 60c extending in an obliquely lower front direction in a manner of connecting the upper section 60a and the lower section 60b. As will be understood from FIG. 6, when the manipulation restricting member 60 is mounted to the seat lock bracket 30, the upper section 60a of the manipulation restricting member 60 is located above the upper section 30a of the seat lock bracket 30. Moreover, the lower section 60b of the manipulation restricting member 60 is located below the lower section 30b of the seat lock bracket 30.

The upper section 60a of the manipulation restricting member 60 has a recess 61 having a depth extending along the up-down direction. The recess 61 is formed in the portion that is covered by the tandem seat 22 in an upper plan view of the vehicle. In the example shown, the recess 61 is a throughhole penetrating the upper section 60a along the up-down direction. Moreover, the upper section 60a includes a tab 62 provided at a rear end portion thereof. The tab 62 locks to a rear end portion of the seat lock bracket 30. Furthermore, the upper section 60a includes a protrusion 63 and a grip 64. The protrusion 63 is located to the left of the recess 61, and protrudes downward. The protrusion 63 may function as an alignment aid when mounting the manipulation restricting member 60 to the seat lock bracket 30. The grip 64 is provided so as to extend rearward from a rear end portion of the upper section 60. The grip 64 is a portion to be gripped when removing the manipulation restricting member 60 from the seat lock bracket 30.

The lower section 60b of the manipulation restricting member 60 includes: a first front extension 65 extending frontward from the left side of a lower end portion of the connecting section 60c; and a second front extension 66 extending frontward from the right side of the lower end portion of the connecting section 60c. The manipulable portion 42a of the main seat lock mechanism 40 becomes located (see FIG. 5) between the first front extension 65 and the second front extension 66 when the manipulation restricting member 60 is mounted to the seat lock bracket 30. In a side view of the vehicle (or more specifically, as viewed from the left), the first front extension 65 covers at least a part of the manipulable portion 42a of the main seat lock mechanism 40. Consequently, any manipulation of the manipulable portion 42a to be made from a lateral direction (or more specifically, laterally from the left) is restricted.

The connecting section 60c of the manipulation restricting member 60 has a rounded portion 67 on a lower face thereof.

As described above, the motorcycle 1 according to the embodiments of the present teaching includes the manipulation restricting member 60, which restricts manipulation of the manipulable portion 42a of the main seat lock mechanism 40, whereby unwanted manipulation of the manipulable portion 42a is prevented. Moreover, since the manipulation restricting member 60 is provided as a separate piece from the tandem seat 22, the degree of freedom concerning the layout of component parts to be provided near the tandem seat 22 or the easiness of mounting the tandem seat 22 are less likely to be reduced. Furthermore, since the manipulation restricting member 60 includes the recess 61 having a depth extending along the up-down direction, movements of the manipulation restricting member 60 along the front-rear/right-left directions can be restricted. Specifically, by allowing a protrusion that is provided at a predetermined position to be inserted in the recess 61 of the manipulation restricting member 60, movements of the manipulation restricting member 60 can be restricted. Examples of such a protrusion will be described below. In the drawings referred to below, the manipulation restricting member 60, the seat lock bracket 30, and like elements are illustrated in simplified shapes.

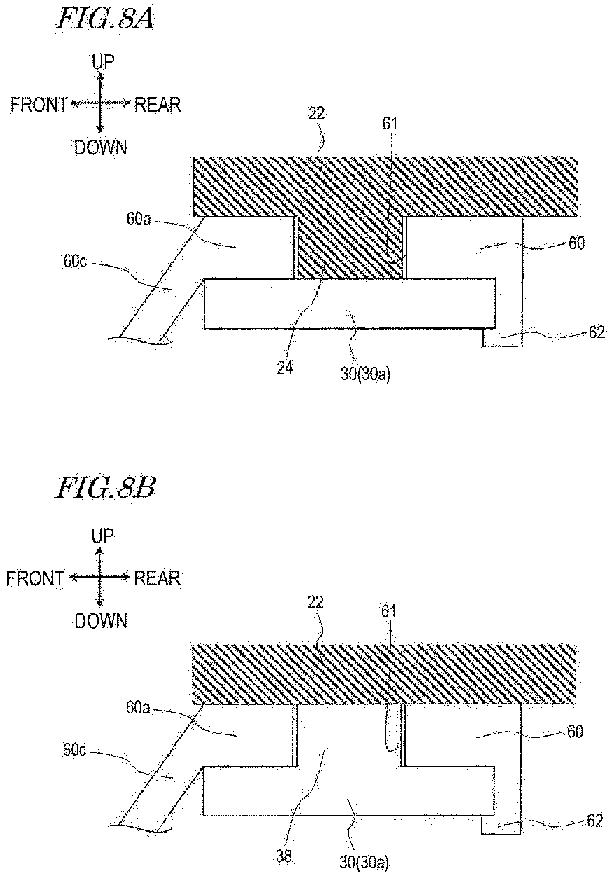

In the example shown in FIG. 8A, the tandem seat 22 includes a downward-protruding protrusion 24. Because of the protrusion 24 of the tandem seat 22 being inserted in the recess 61 of the manipulation restricting member 60, movements of the manipulation restricting member 60 along the front-rear/right-left directions can be restricted, and the manipulation restricting member 60 can be prevented from being removed once the tandem seat 22 is secured by the tandem seat lock mechanism 50.

The protrusion 24 of the tandem seat 22 may be a load-receiving member, for example. As used herein, a "load-receiving member" is a component part that is located above the seat lock bracket 30 to receive the load of the tandem seat 22. The load-receiving member may be made of rubber, for example, and be attached to a bottom plate that is located on a bottom face of the tandem seat 22. It will be appreciated that the protrusion 24 of the tandem seat 22 is not limited to a load-receiving member.

In the example shown in FIG. 8B, the seat lock bracket 30 includes an upward-protruding protrusion 38. Because of the protrusion 38 of the seat lock bracket 30 being inserted in the recess 61 of the manipulation restricting member 60, movements of the manipulation restricting member 60 along the front-rear/right-left directions can be restricted.

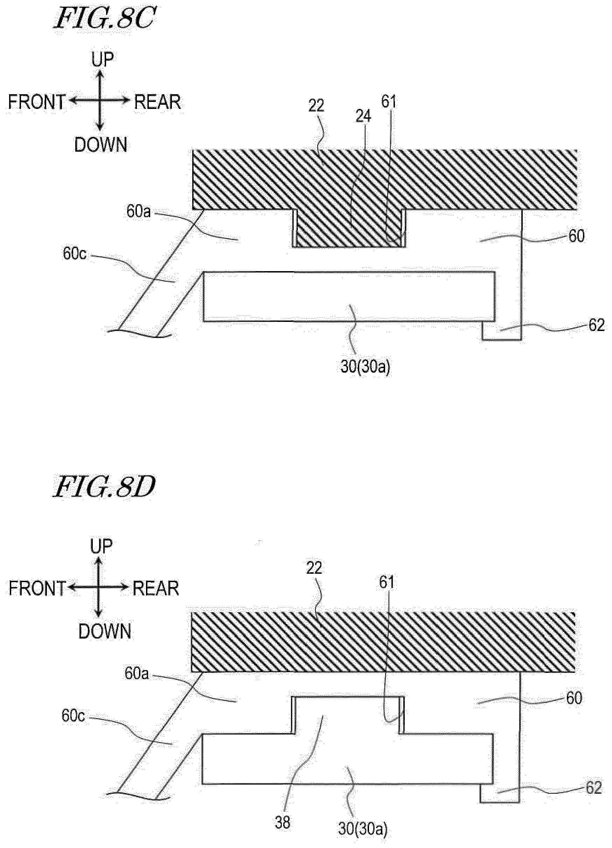

Note that the recess 61 of the manipulation restricting member 60 does not need to be a throughhole. In the example shown in FIG. 8C, the recess 61 into which the protrusion 24 of the tandem seat 22 is inserted is a bottomed hole that is dented in a downward direction. In the example shown in FIG. 8D, the recess 61 into which the protrusion 38 of the seat lock bracket 30 is inserted is a bottomed hole that is dented in an upward direction. In the examples shown in FIG. 8C and FIG. 8D, too, movements of the manipulation restricting member 60 along the front-rear/right-left directions can be restricted.

Moreover, both of the protrusion 24 of the tandem seat 22 and the protrusion 38 of the seat lock bracket 30 may be inserted in the reces 61 of the manipulation restricting member 60. Moreover, the manipulation restricting member 60 may include both a bottomed hole that is dented in an upward direction and a bottomed hole that is dented in a downward direction as recesses 61.

Note that the shape of the recess(es) 61 in an upper plan view is not limited to a substantially circular shape as illustrated. Moreover, the protrusion(s) to be inserted in the recess(es) 61 of the manipulation restricting member 60 is not limited to those illustrated above.

Thus, according to an embodiment of the present teaching, without lowering the degree of freedom concerning the layout of component parts or the easiness of mounting the tandem seat 22, manipulation of the main seat lock mechanism 40 can be restricted.

As in the present embodiment, where the manipulation restricting member 60 includes a portion (first front extension 65) that covers at least a part of the manipulable portion 42a in a side view of the vehicle, manipulation from a lateral direction can be restricted based on a relatively simple structure.

As will be appreciated from the foregoing, the main seat lock mechanism 40 is configured so that the engagement between the first engaging portion (the locked portion 21 of the main seat 20) and the second engaging portion (the seat-locking portion 42b of the main seat lock mechanism 40) can be released by sliding the manipulable portion 42a by a predetermined distance or more. From the standpoint of better preventing a release of engagement from occurring due to an unwanted manipulation of the manipulable portion 42a, the distance between the first front extension 65 (i.e., a portion that covers at least a part of the manipulable portion 42a) of the manipulation restricting member 60 and the manipulable portion 42a may preferably be smaller than the aforementioned predetermined distance (i.e., the distance of movement needed to effect a release of engagement).

In the case where the manipulation restricting member 60 is made of rubber, the manipulation restricting member 60 may undergo elastic deformation, thus facilitating attachment/detachment of the manipulation restricting member 60 to/from the seat lock bracket 30.

In the case where the manipulation restricting member 60 includes the tab 62 that locks to the rear end portion of the seat lock bracket 30, the position at which the manipulation restricting member 60 is attached to the seat lock bracket 30 can be kept stable.

In the case where the connecting section 60c of the manipulation restricting member 60 includes the rounded portion 67 on the lower face, during the mounting of the manipulation restricting member 60, the manipulation restricting member 60 having been inserted in between the lower face of the main seat 20 and the seat lock bracket 30 may then be pulled rearward, whereby the manipulation restricting member 60 will rise on the basis of the rounded portion 67 serving as a fulcrum. This makes it easier to position the first front extension 65 so as to cover the manipulable portion 42a.

Although the motorcycle 1 has been exemplified as a straddled vehicle, the straddled vehicle is meant to be any automotive vehicle on which a rider straddles and rides, without being limited to motorcycles. The straddled vehicle may be a three-wheeled motorcycle (LMW) of a type whose direction of travel is changed as its body is tilted, or a straddled ATV (All Terrain Vehicle).

As described above, a straddled vehicle according to the embodiments of the present teaching is a straddled vehicle comprising: a main seat 20 on which a rider sits; a tandem seat 22 disposed rearward of the main seat 20; a seat frame 76 being located below the main seat 20 and the tandem seat 22 to support the main seat 20 and the tandem seat 22; a seat lock bracket 30 attached to the seat frame 76 and disposed near a rear end portion of the main seat 20; a main seat lock mechanism 40 to secure the main seat 20 to the seat frame 76 in a detachable manner; and a tandem seat lock mechanism 50 to secure the tandem seat 22 to the seat frame 76 in a detachable manner, the tandem seat lock mechanism 50 being manipulable with a key. The main seat lock mechanism 40 is attached to the seat lock bracket 30; the main seat 20 includes a first engaging portion 21 disposed on a back face of the main seat 20; the main seat lock mechanism 40 includes a manipulable portion 42a to be manipulated with a finger, and a second engaging portion 42b to engage with the first engaging portion 21; the straddled vehicle further includes a manipulation restricting member 60 to restrict manipulation of the manipulable portion 42a of the main seat lock mechanism 40, the manipulation restricting member 60 being provided as a separate piece from the tandem seat 22 and mounted to the seat lock bracket 30 in a detachable manner; a portion of the manipulation restricting member 60 is covered by the tandem seat 22 in an upper plan view of the vehicle; and the manipulation restricting member 60 includes a recess formed in the portion that is covered by the tandem seat 22 in an upper plan view of the vehicle, the recess 61 having a depth extending along an up-down direction.

A straddled vehicle according to the embodiments of the present teaching includes the manipulation restricting member 60, which restricts manipulation of the manipulable portion 42a of the main seat lock mechanism 40, whereby unwanted manipulation of the manipulable portion 42a can be prevented. Moreover, since the manipulation restricting member 60 is provided as a separate piece from the tandem seat 22, the degree of freedom concerning the layout of component parts to be provided near the tandem seat 22 or the easiness of mounting the tandem seat 22 are less likely to be reduced. Furthermore, since the manipulation restricting member 60 includes the recess 61 having a depth extending along the up-down direction, movements of the manipulation restricting member 60 along the front-rear/right-left directions can be restricted.

In one embodiment, the manipulation restricting member 60 comprises a portion 65 that covers at least a part of the manipulable portion 42a in a side view of the vehicle.

Because the manipulation restricting member 60 includes a portion 65 that covers at least a part of the manipulable portion 42a in a side view of the vehicle, manipulation from a lateral direction can be restricted based on a relatively simple structure.

In one embodiment, the main seat lock mechanism 40 is configured so that engagement between the first engaging portion 21 and the second engaging portion 42b is released when the manipulable portion 42a is slid by a predetermined distance or more; and a distance between the portion 65 of the manipulation restricting member 60 that covers at least a part of the manipulable portion 42a and the manipulable portion 42a is smaller than the predetermined distance.

The main seat lock mechanism 40 may be configured so that, for example, the engagement between the first engaging portion 21 and the second engaging portion 42b can be released by sliding the manipulable portion 42a by a predetermined distance or more. In that case, from the standpoint of better preventing a release of engagement from occurring due to an unwanted manipulation of the manipulable portion 42a, the distance between the portion 65 of the manipulation restricting member 60 that covers at least a part of the manipulable portion 42a and the manipulable portion 42a may preferably be smaller than the aforementioned predetermined distance (i.e., the distance of movement needed to effect a release of engagement).

In the embodiments, the tandem seat 22 includes a downward-protruding protrusion 24, and/or the seat lock bracket 30 includes an upward-protruding protrusion 38; and the protrusion 24 of the tandem seat 22 and/or the protrusion 38 of the seat lock bracket 30 are inserted in the recess 61 of the manipulation restricting member 60.

In said present cases where the tandem seat 22 includes the downward-protruding protrusion 24 and/or the seat lock bracket 30 includes the upward-protruding protrusion 38, by allowing the protrusion 24 of the tandem seat 22 and/or the protrusion 38 of the seat lock bracket 30 to be inserted in the recess 61 of the manipulation restricting member 60, movements of the manipulation restricting member 60 along the front-rear/right-left directions can be restricted.

In one embodiment, the tandem seat 22 includes the protrusion 24; and the protrusion 24 of the tandem seat 22 is inserted in the recess 61 of the manipulation restricting member 60.

In the case where the tandem seat 22 includes the downward-protruding protrusion 24, by allowing the protrusion 24 of the tandem seat 22 to be inserted in the recess 61 of the manipulation restricting member 60, movements of the manipulation restricting member 60 along the front-rear/right-left directions can be restricted. Moreover, the manipulation restricting member 60 can be prevented from being removed once the tandem seat 22 is secured by the tandem seat lock mechanism 50.

In one embodiment, the protrusion 24 of the tandem seat 22 is a load-receiving member.

The protrusion 24 of the tandem seat 22 may be a load-receiving member to receive the load of the tandem seat 22, for example.

In one embodiment, the recess 61 of the manipulation restricting member 60 is a throughhole.

The recess 61 of the manipulation restricting member 60 may be a throughhole.

In one embodiment, the manipulation restricting member 60 is made of rubber.

In the case where the manipulation restricting member 60 is made of rubber, the manipulation restricting member 60 may undergo elastic deformation, thus facilitating attachment/detachment of the manipulation restricting member 60 to/from the seat lock bracket 30.

In one embodiment, the manipulation restricting member 60 includes a tab 62 that locks to a rear end portion of the seat lock bracket 30.

In the case where the manipulation restricting member 60 includes the tab 62 that locks to the rear end portion of the seat lock bracket 30, the position at which the manipulation restricting member 60 is attached to the seat lock bracket 30 can be kept stable.

According to the embodiments of the present teaching, straddled vehicles are provided in which manipulation of the main seat lock mechanism is be restricted, without reducing the degree of freedom concerning the layout of component parts or the easiness of mounting of the tandem seat.

## Claims

1. A straddled vehicle comprising:
a main seat (20) configured for a driver to sit on;
a tandem seat (22) disposed rearward of the main seat (20) and configured for a co-rider to sit on;
a seat frame (76) being located below the main seat (20) and the tandem seat (22) with regard to an up-down direction of the vehicle to support the main seat (20) and the tandem seat (22);
a seat lock bracket (30) attached to the seat frame (76) and disposed near a rear end portion of the main seat (20);
a main seat lock mechanism (40) configured to secure the main seat (20) to the seat frame (76) in a detachable manner; and
a tandem seat lock mechanism (50) configured to secure the tandem seat (22) to the seat frame (76) in a detachable manner, the tandem seat lock mechanism (50) being configured to be manipulable with a key, wherein,
the main seat lock mechanism (40) is attached to the seat lock bracket (30);
the main seat (20) includes a first engaging portion (21) disposed on a back face of the main seat (20);
the main seat lock mechanism (40) includes a manipulable portion (42a) configured to be manipulated with a finger of the driver, and a second engaging portion (42b) configured to engage with the first engaging portion (21);
the straddled vehicle further includes a manipulation restricting member (60) configured to restrict manipulation of the manipulable portion (42a) of the main seat lock mechanism (40), the manipulation restricting member (60) being provided as a separate piece from the tandem seat (22) and mounted to the seat lock bracket (30) in a detachable manner;
a portion of the manipulation restricting member (60) is covered by the tandem seat (22) in an upper plan view of the vehicle; and
the manipulation restricting member (60) includes a recess (61) formed in the portion that is covered by the tandem seat (22) in an upper plan view of the vehicle, the recess (61) having a depth extending along the up-down direction of the vehicle, **characterized in that** the tandem seat (22) includes a downward-protruding protrusion (24) with regard to the up-down direction of the vehicle, and/or the seat lock bracket (30) includes an upward-protruding protrusion (38) with regard to the up-down direction of the vehicle; and
the protrusion of the tandem seat (22) and/or the protrusion of the seat lock bracket (30) are inserted in the recess (61) of the manipulation restricting member (60).

2. The straddled vehicle of claim 1, **characterized in that** the manipulation restricting member (60) comprises a portion that covers at least a part of the manipulable portion (42a) in a side view of the vehicle.

3. The straddled vehicle of claim 2, **characterized in that** the main seat lock mechanism (40) is configured so that engagement between the first engaging portion (21) and the second engaging portion (42b) is released when the manipulable portion (42a) is slid by a predetermined distance or more; and
a distance between the portion of the manipulation restricting member (60) that covers at least a part of the manipulable portion (42a) and the manipulable portion (42a) is smaller than the predetermined distance.

4. The straddled vehicle of claim 1, **characterized in that** the tandem seat (22) includes downward-protruding protrusion (24); and
the downward-protruding protrusion (24) of the tandem seat (22) is inserted in the recess (61) of the manipulation restricting member (60).

5. The straddled vehicle of claim 4, **characterized in that** the downward-protruding protrusion (24) of the tandem seat (22) is a load-receiving member.

6. The straddled vehicle of any of claims 1 to 5, **characterized in that** the recess (61) of the manipulation restricting member (60) is a throughhole.

7. The straddled vehicle of any of claims 1 to 6, **characterized in that** the manipulation restricting member (60) is made of rubber.

8. The straddled vehicle of any of claims 1 to 7, **characterized in that** the manipulation restricting member (60) includes a tab (62) that locks to a rear end portion of the seat lock bracket (30).

## Patentansprüche

1. Ein Spreiz-Sitz-Fahrzeug, das umfasst:
einen Hauptsitz (20), der konfiguriert ist, für ein Fahrer, um darauf zu sitzen;
einen Tandemsitz (22), der hinter dem Hauptsitz (20) angeordnet und konfiguriert ist, für ein Mitfahrer, um darauf zu sitzen;
einen Sitzrahmen (76), der unterhalb des Hauptsitzes (20) und des Tandemsitzes (22) in Bezug auf eine Aufwärts-Abwärts-Richtung des Fahrzeugs angeordnet ist, um den Hauptsitz (20) und den Tandemsitz (22) zu lagern;
eine Sitzverriegelungshalterung (30), die an dem Sitzrahmen (76) angebracht und in der Nähe eines hinteren Endabschnitts des Hauptsitzes (20) angeordnet ist;
einen Hauptsitz-Verriegelungsmechanismus (40), der konfiguriert ist, um den Hauptsitz (20) abnehmbar am Sitzrahmen (76) zu sichern; und
einen Tandemsitz-Verriegelungsmechanismus (50), der konfiguriert ist, um den Tandemsitz (22) an dem Sitzrahmen (76) in abnehmbaren Weise zu befestigen, der Tandemsitz-Verriegelungsmechanismus (50) ist konfiguriert, um mit einem Schlüssel betätigt zu werden, wobei,
der Hauptsitz-Verriegelungsmechanismus (40) ist an der Sitzverriegelungshalterung (30) angebracht;
der Hauptsitz (20) beinhaltet einen ersten Eingriffsabschnitt (21), der an einer Rückseite des Hauptsitzes (20) angeordnet ist;
der Hauptsitz-Verriegelungsmechanismus (40) beinhaltet einen manipulierbaren Abschnitt (42a), der konfiguriert ist, um mit einem Finger des Fahrers manipuliert zu werden, und einen zweiten Eingriffsabschnitt (42b), der konfiguriert ist, um mit dem ersten Eingriffsabschnitt (21) in Eingriff zu kommen;
das Spreiz-Sitz-Fahrzeug beinhaltet weiterhin ein Manipulationsbegrenzungselement (60), das konfiguriert ist, um die Manipulation des manipulierbaren Abschnitts (42a) des Hauptsitz-Verriegelungsmechanismus (40) zu beschränken, das Manipulationsbegrenzungselement (60) ist als ein separates Teil von dem Tandemsitz (22) vorgesehen und an der Sitzverriegelungshalterung (30) in einer abnehmbaren Weise angebracht;
ein Abschnitt des Manipulationsbegrenzungselements (60) ist in einer oberen Draufsicht auf das Fahrzeug durch den Tandemsitz (22) abgedeckt; und
das Manipulationsbegrenzungselement (60) beinhaltet eine Aussparung (61), die in dem Abschnitt ausgebildet ist, der in einer oberen Draufsicht des Fahrzeugs durch den Tandemsitz (22) abgedeckt ist, die Aussparung (61) hat eine Tiefe, die sich entlang der Aufwärts-Abwärts-Richtung des Fahrzeugs erstreckt, **dadurch gekennzeichnet, dass** der Tandemsitz (22) einen nach unten vorstehenden Vorsprung (24) in Bezug auf die Aufwärts-Abwärts-Richtung des Fahrzeugs beinhaltet, und/oder die Sitzverriegelungshalterung (30) einen nach oben vorstehenden Vorsprung (38) in Bezug auf die Aufwärts-Abwärts-Richtung des Fahrzeugs beinhaltet; und
der Vorsprung des Tandemsitzes (22) und/oder der Vorsprung der Sitzverriegelungshalterung (30) in die Aussparung (61) des Manipulationsbegrenzungselements (60) eingesetzt sind.

2. Das Spreiz-Sitz-Fahrzeug gemäß Anspruch 1, **dadurch gekennzeichnet, dass** das Manipulationsbegrenzungselement (60) einen Abschnitt umfasst, der zumindest einen Teil des manipulierbaren Abschnitts (42a) in einer Seitenansicht des Fahrzeugs abdeckt.

3. Das Spreiz-Sitz-Fahrzeug gemäß Anspruch 2, **dadurch gekennzeichnet, dass** der Hauptsitz-Verriegelungsmechanismus (40) konfiguriert ist, so dass der Eingriff zwischen dem ersten Eingriffsabschnitt (21) und dem zweiten Eingriffsabschnitt (42b) gelöst wird, wenn der manipulierbare Abschnitt (42a) um eine vorbestimmte Distanz oder mehr verschoben wird; und
eine Distanz zwischen dem Abschnitt des Manipulationsbegrenzungselements (60), der zumindest einen Teil des manipulierbaren Abschnitts (42a) abdeckt, und dem manipulierbaren Abschnitt (42a) kleiner als die vorbestimmte Distanz ist.

4. Das Spreiz-Sitz-Fahrzeug gemäß Anspruch 1, **dadurch gekennzeichnet, dass** der Tandemsitz (22) einen nach unten vorstehenden Vorsprung (24) beinhaltet; und
der nach unten vorstehenden e Vorsprung (24) des Tandemsitzes (22) in die Aussparung (61) des Manipulationsbegrenzungselements (60) eingesetzt ist.

5. Das Spreiz-Sitz-Fahrzeug gemäß Anspruch 4, **dadurch gekennzeichnet, dass** der nach unten vorstehenden Vorsprung (24) des Tandemsitzes (22) ein lastaufnehmendes Element ist.

6. Das Spreiz-Sitz-Fahrzeug gemäß irgendeinem der Ansprüche 1 bis 5, **dadurch gekennzeichnet, dass** die Aussparung (61) des Manipulationsbegrenzungselements (60) ein Durchgangsloch ist.

7. Das Spreiz-Sitz-Fahrzeug gemäß irgendeinem der Ansprüche 1 bis 6, **dadurch gekennzeichnet, dass** das Manipulationsbegrenzungselement (60) aus Gummi gemacht ist.

8. Das Spreiz-Sitz-Fahrzeug gemäß irgendeinem der Ansprüche 1 bis 7, **dadurch gekennzeichnet, dass** das Manipulationsbegrenzungselement (60) eine Lasche (62) beinhaltet, die an einem hinteren Endabschnitt der Sitzverriegelungshalterung (30) einrastet.

## Revendications

1. Véhicule à enfourcher comprenant :
un siège principal (20) configuré pour qu'un conducteur s'assoit dessus ;
un siège passager (22) disposé à l'arrière du siège principal (20) et configuré pour qu'un co-pilote s'assoit dessus ;
un châssis de sièges (76) qui est situé sous le siège principal (20) et le siège passager (22) par rapport à une direction haut-bas du véhicule pour supporter le siège principal (20) et le siège passager (22) ;
un support de verrouillage de sièges (30) fixé au châssis de sièges (76) et disposé à proximité d'une partie d'extrémité arrière du siège principal (20) ;
un mécanisme de verrouillage de siège principal (40) configuré pour fixer le siège principal (20) au châssis de sièges (76) d'une manière amovible ; et
un mécanisme de verrouillage de siège passager (50) configuré pour fixer le siège passager (22) au châssis de sièges (76) d'une manière amovible, le mécanisme de verrouillage de siège passager (50) étant configuré pour pouvoir être manipulé avec une clé, dans lequel,
le mécanisme de verrouillage de siège principal (40) est fixé au support de verrouillage de sièges (30) ;
le siège principal (20) comprend une première partie de mise en prise (21) disposée sur une face arrière du siège principal (20) ;
le mécanisme de verrouillage de siège principal (40) comprend une partie manipulable (42a) configurée pour être manipulée avec un doigt du conducteur, et une seconde partie de mise en prise (42b) configurée pour venir en prise avec la première partie de mise en prise (21) ;
le véhicule à enfourcher comprend en outre un élément de restriction de manipulation (60) configuré pour restreindre une manipulation de la partie manipulable (42a) du mécanisme de verrouillage de siège principal (40), l'élément de restriction de manipulation (60) étant prévu sous forme d'une pièce séparée du siège passager (22) et monté sur le support de verrouillage de sièges (30) d'une manière amovible ;
une partie de l'élément de restriction de manipulation (60) est recouverte par le siège passager (22) sur une vue en plan de dessus du véhicule ; et
l'élément de restriction de manipulation (60) comprend un évidement (61) formé dans la partie qui est recouverte par le siège passager (22) sur une vue en plan de dessus du véhicule, l'évidement (61) ayant une profondeur s'étendant le long de la direction haut-bas du véhicule, **caractérisé en ce que** le siège passager (22) comprend une saillie faisant saillie vers le bas (24) par rapport à la direction haut-bas du véhicule,
et/ou le support de verrouillage de sièges (30) comprend une saillie faisant saillie vers le haut (38) par rapport à la direction haut-bas du véhicule ; et
la saillie du siège passager (22) et/ou la saillie du support de verrouillage de sièges (30) sont insérées dans l'évidement (61) de l'élément de restriction de manipulation (60).

2. Véhicule à enfourcher selon la revendication 1, **caractérisé en ce que** l'élément de restriction de manipulation (60) comprend une partie qui recouvre au moins une partie de la partie manipulable (42a) sur une vue de côté du véhicule.

3. Véhicule à enfourcher selon la revendication 2, **caractérisé en ce que** le mécanisme de verrouillage de siège principal (40) est configuré de sorte que la mise en prise entre la première partie de mise en prise (21) et la seconde partie de mise en prise (42b) est libérée lorsque la partie manipulable (42a) est amenée à glisser sur une distance prédéterminée ou plus ; et
une distance entre la partie de l'élément de restriction de manipulation (60) qui recouvre au moins une partie de la partie manipulable (42a) et la partie manipulable (42a) est inférieure à la distance prédéterminée.

4. Véhicule à enfourcher selon la revendication 1, **caractérisé en ce que** le siège passager (22) comprend une saillie faisant saillie vers le bas (24) ; et
la saillie faisant saillie vers le bas (24) du siège passager (22) est insérée dans l'évidement (61) de l'élément de restriction de manipulation (60).

5. Véhicule à enfourcher selon la revendication 4, **caractérisé en ce que** la saillie faisant saillie vers le bas (24) du siège passager (22) est un élément de réception de charge.

6. Véhicule à enfourcher selon l'une quelconque des revendications 1 à 5, **caractérisé en ce que** l'évidement (61) de l'élément de restriction de manipulation (60) est un trou traversant.

7. Véhicule à enfourcher selon l'une quelconque des revendications 1 à 6, **caractérisé en ce que** l'élément de restriction de manipulation (60) est constitué de caoutchouc.

8. Véhicule à enfourcher selon l'une quelconque des revendications 1 à 7, **caractérisé en ce que** l'élément de restriction de manipulation (60) comprend une languette (62) qui se verrouille sur une partie d'extrémité arrière du support de verrouillage de sièges (30).
